# EUROPEAN PATENT SPECIFICATION

(11) **EP 4 028 186 B1**
(45) Date of publication and mention of the grant of the patent: **08.11.2023**
(21) Application number: 20786597.3
(22) Date of filing: 11.09.2020
(51) Int. Cl.: B23B 13/02, B23B 13/10, B23Q 7/00, B65G 1/04, B65G 47/88, B65G 47/84, B23B 13/04, B65G 29/02

(54) **APPARATUS FOR FEEDING BARS**
VORRICHTUNG ZUM ZUFÜHREN VON STANGEN
APPAREIL D''ALIMENTATION EN BARRES

(30) Priority: 12.09.2019 IT 201900016190
(43) Date of publication of application: 20.07.2022
(73) Proprietor: Cucchi Giovanni & C. S.r.l., 20041 Bussero (IT)
(72) Inventor: CUCCHI, Cesare, 20041 Bussero (IT)
(74) Representative: Luppi Intellectual Property S.r.l.
(86) International application number: PCT/IB2020/058471
(87) International publication number: WO 2021/048814

(56) References cited:
- DE-A1- 2 414 132
- US-A- 5 320 008
- US-A- 5 860 340
- US-A1- 2002 098 073
- US-A1- 2006 153 666
- US-A1- 2011 274 520
- US-A1- 2016 158 845
- US-B1- 6 199 461

## Description

### BACKGROUND OF THE INVENTION

This invention relates to an apparatus for feeding bars to a machine tool, in particular to an automatic lathe. US 5,860,340 discloses an example of an apparatus for feeding bars to a machine tool in accordance with the preamble of claim 1.

### PRIOR ART

Different apparatuses are known for automatic feeding of bars to the spindles of a lathe.

In general, a bar feeding apparatus comprises a rotary drum that is rotatable around a horizontal longitudinal axis thereof and supporting a plurality of guides suitable for containing and guiding respective bars to be fed to the aforesaid lathe.

The bar feeding apparatus is provided with a loading mechanism for loading the bars that comprises a plane on which the bars are rested, and a slide that is movable vertically and that supports articulated brackets that remove one bar at a time and are lowered to release the bar to a specific guide of the drum placed below.

The articulated brackets are driven by a suitable control member that moves the articulated brackets from a retaining position in which they prevent the lifted bar from falling and a release position in which they are mutually aligned to define a chute for the same bar which in this manner can be unloaded into the aforesaid guide.

The guides are distributed both longitudinally along the drum and circumferentially on the latter.

The guides are openable by a rather complex mechanism having several articulated levers that are driven by a suitable motor or cylinder that is housed in a lower zone of the apparatus.

The bar feeding apparatus comprises a pushing device that is suitable for pushing the bar that is in the feeding position, i.e. it is aligned on the machining zone of the spindle of the lathe.

This pushing device comprises a pusher block (strut) that is advanced forwards to the lathe and retracted backwards by a screw-nut system that is in turn driven by a normal electric motor controlled by a suitable control unit.

The rather complex delicate pushing device requires a constant and thorough lubricating action to avoid seizing or other undesired damage phenomena. In order to check the correct movement of the pusher block, it is necessary to provide suitable position sensors placed along the stroke of the pusher block, and this further complicates the already complex pushing device.

To sum up, the known feeding apparatus disclosed above has different drawbacks that are summarized below.

A first drawback is in general provided by the great complexity in structural and functional terms of the bar loading mechanism.

Also the screw-nut system for driving the pushing device, together with the lubrication circuit that is necessary for ensuring correct operation is structurally complex, expensive and demanding from the operational point of view and from the maintenance point of view.

A further drawback is the structural and functional complexity of the mechanism with several articulated levers to open the guides.

Lastly, drawbacks can arise in the guide units, which do not always ensure correct advancement of the bars, especially in the case of bars with a diameter that is much reduced with respect to the inner section of the guide units, these bars being often subjected to jamming at the final section facing the lathe.

In the light of what has been set out above, ample room for improvement is found in current bar-feeding apparatuses.

### OBJECTS OF THE INVENTION

An object of the present invention is to improve current bar-feeding apparatuses. Another object is to provide a feeding apparatus that is simplified from the structural and functional point of view.

In particular, it is intended to propose an apparatus whose guide unit opening system is very simplified and equally effective and reliable and in which the operation of loading the bars and guide units is simplified.

A further object is to simplify the operations of pushing and advancing the bars inside the guide units and reduce possible drawbacks due to jamming, dynamic stress and vibrations, friction and high temperatures that may occur during bar-feeding.

It would also be desirable to ensure correct operation of the drum and of the guides without necessarily having to resort to complex, expensive and redundant lubrication and refrigeration systems.

### SHORT DESCRIPTION OF THE INVENTION

The above can be achieved by an apparatus for feeding bars to a machine tool as defined in claim 1.

Owing to the invention, the aforesaid drawbacks are overcome.

In particular, the apparatus according to the invention, advantageously, has a structural configuration that is extremely simplified with respect to the apparatus of the prior art and results, amongst other advantages, in a significant reduction in manufacturing costs, greater mechanical reliability and a significant lowering of undesired vibrations.

Further features and advantages will be clearer from the appended claims, the description and the attached drawings.

### SHORT DESCRIPTION OF THE FIGURES

The invention can be better understood and implemented with reference to the attached drawings, which illustrate an embodiment thereof by way of non-limiting example, in which:
Figure 1 is a schematic front of the apparatus according to the invention;
Figure 2 is a perspective schematic view of part of the apparatus of Figure 1;
Figure 3 shows a rear portion of the apparatus;
Figure 4 is an enlarged detail of Figure 3;
Figures 5 and 6 show an opening-lever mechanism of the apparatus according to the invention in two different operating positions;
Figures 7 to 10 show a sequence of operating positions taken on by a loading unit included in the apparatus according to the invention;
Figure 11 shows the possibility of adjusting the loading unit and in a selector unit that are part of the apparatus according to the invention;
Figures 12 and 13 show two different operating configurations of the selector unit of the apparatus;
Figures 14 and 15 show two possible embodiments of the apparatus, corresponding to two different spatial arrangements of the loading unit, of the selector unit and of an actuator element for opening the guide units;
Figure 16 shows a front portion of the apparatus, intended to be placed in a position adjacent to a lathe for machining bars;
Figures 17 and 18 show two types of reduction elements intended to be fitted in the apparatus and shaped for slidingly receiving internally and guiding bars having reduced diameter during feeding to the lathe;
Figures 19 and 20 schematically show a guide unit respectively without and with a reduction-element.

### DETAILED DESCRIPTION OF THE INVENTION

With reference to the attached Figures, an apparatus 1 is shown for feeding, automatically, bars 2 to a machine tool, in particular to a lathe that can be of the single-spindle or of the multi spindle type.

In particular, the apparatus 1 has a first end E_{A} that is suitable for being placed in a position adjacent to a spindle of the lathe.

The apparatus 1 comprises a rotary drum 3 that is rotatable around its own longitudinal axis A_{L} and is provided with a plurality of guide units 4 for the bars 2, distributed circumferentially and extending parallel to the aforesaid longitudinal axis A_{L}.

Each guide unit 4 consists of two parts 4A, 4B that are reciprocally movable and openable, by means of a respective lever 5 placed at one rear end (opposite the aforesaid first end E_{A}), to receive inside a respective bar 2 to be advanced towards the machine tool.

Each openable guide comprises a fixed part, i.e. fitted in a stationary position to the drum 3, and a part that is transversely movable with respect to the longitudinal axis A_{L} of the drum 3.

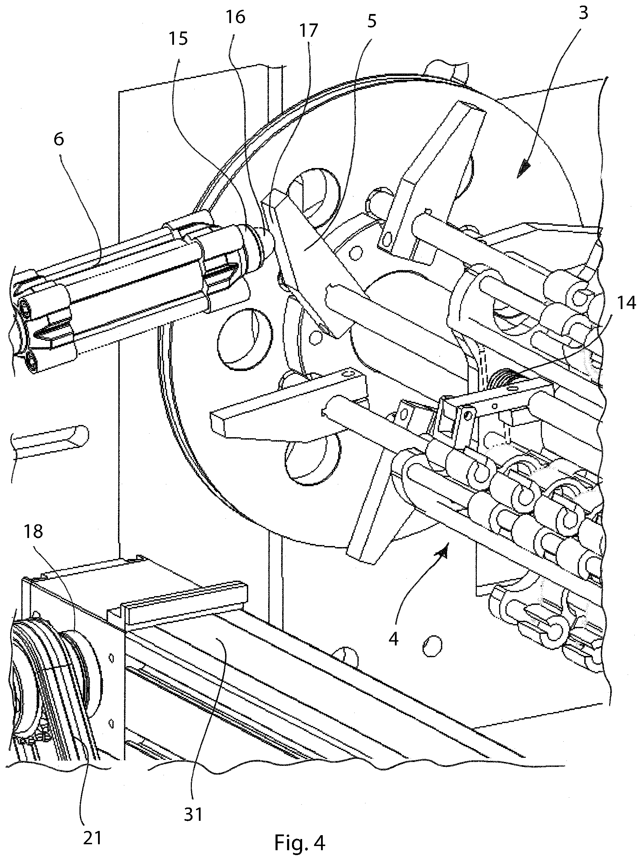

The guide unit 4 is maintained normally closed by a respective torsion spring 14 (shown in Figure 4) that acts on the aforesaid movable part by urging the movable part to the corresponding fixed part.

The movable part, by a rotation given to the corresponding lever 5, is first removed from the respective fixed part so as to enable a bar 2 to be inserted and subsequently, owing to the elastic return of the torsion spring 14, approaches the respective fixed part, enclosing inside the aforesaid bar 2 that has to be guided during machining to the lathe.

The feeding apparatus 1 includes an actuator element 6, configured to act, each time, directly on a specific lever 5 to open the corresponding guide unit 4.

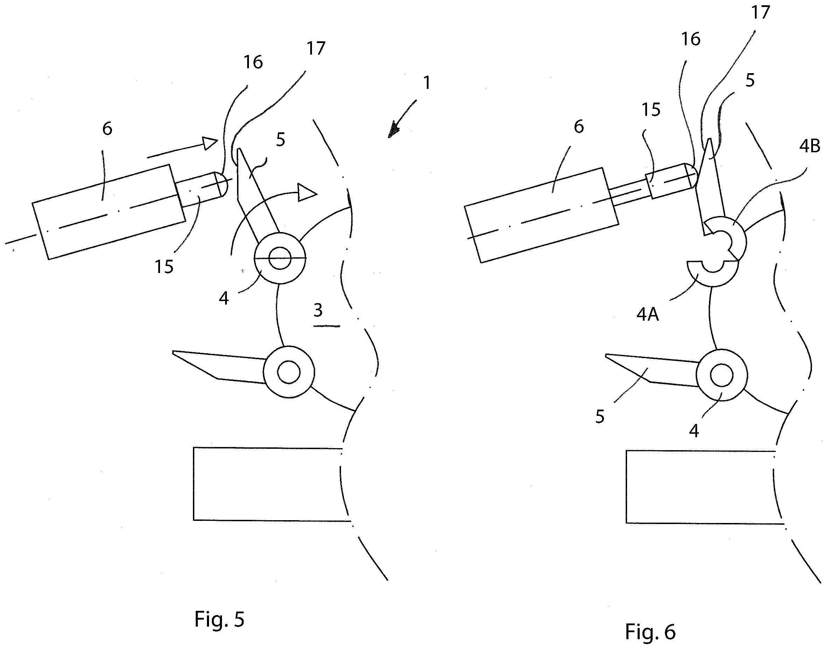

As better shown in Figures 4 to 6, the actuator element 6 comprises a pushing stem 15, configured to intercept a contact surface 17 of the respective lever 5 to push the latter so as to open the corresponding guide units 4.

A spherical element 16 that is suitable for coming into contact with the contact surface 17 of the lever 5 is press-fitted to the outermost end of the pushing stem 15.

Owing to the particular geometrical shape of the spherical element 16, the spherical element 16 adapts to the contact surface 17 whatever the position of the latter, i.e. whatever orientation the contact surface 17 takes on during rotation of the lever 5.

The pushing stem 15 is linearly movable. In particular, the actuator element 6 is a pneumatic cylinder, thus simple from the structural functional point of view and equally reliable.

Owing to the direct interaction, i.e. owing to the direct contact of the actuator element 6 with the lever 5, significant structural and functional simplification of the opening system for opening the guide units 4 is achieved, whereas in prior art systems they are rather complex with all the drawbacks that arise therefrom.

The apparatus 1 comprises a support loading unit 7 suitable for receiving and supporting a plurality of bars 2 in a position adjacent to the drum 3.

The support loading unit 7 comprises a plurality of support bars 9 distributed along a loading zone Z_{L} that extends longitudinally in a position adjacent to the drum 3. Each support bar 9 extends transversely with respect to the aforesaid longitudinal axis A_{L}. For example, three support bars 9 can be provided that are spaced apart equally and distributed along the loading zone Z_{L}, as schematized in the Figures, or it is possible to provide different and desired numbers and distribution of the support bars 9 on the basis of the geometrical and dimensional features of the feeding apparatus 1 or on the basis of specific needs.

Obviously, the support bars 9 can be replaced by other equivalent elements of a desired shape such as plates, etc.

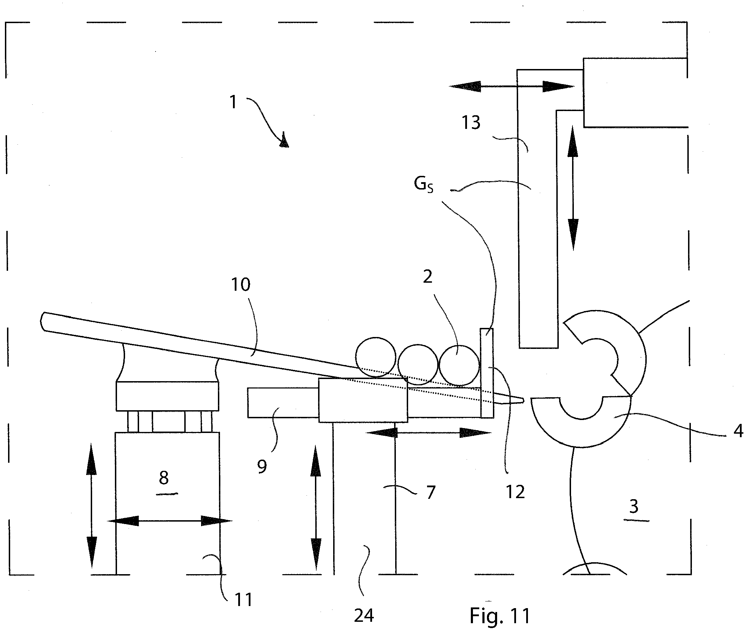

Each support bar 9 is connected, in an adjustable manner in position, to a respective vertical upright 24. In particular, the support bar 9 is horizontally adjustable, as shown better in Figures 11 to 13, so as to adjust the distance thereof from the drum 3.

The position of each support bar 9 is adjustable manually or automatically by a respective drive member.

The apparatus 1 is provided with a loading unit G_{L} comprising a lifting device 8 for the bars 2.

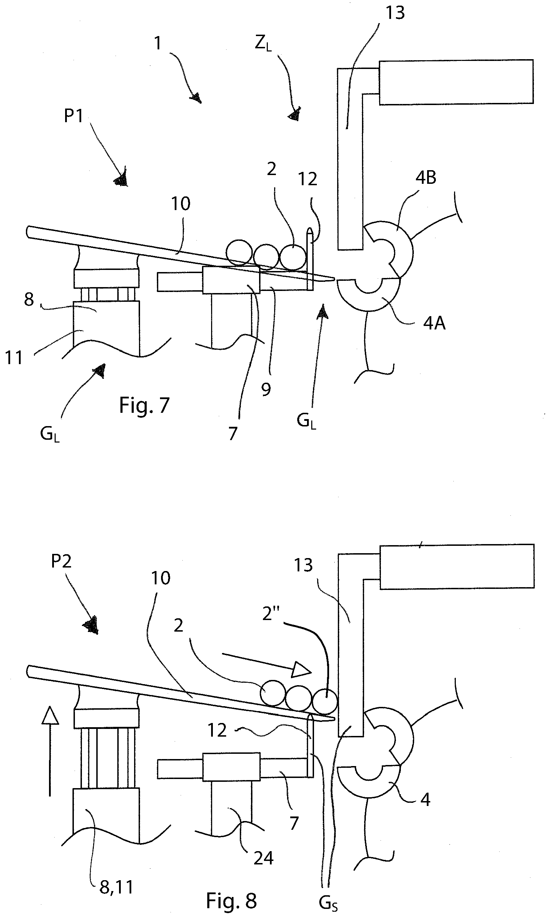

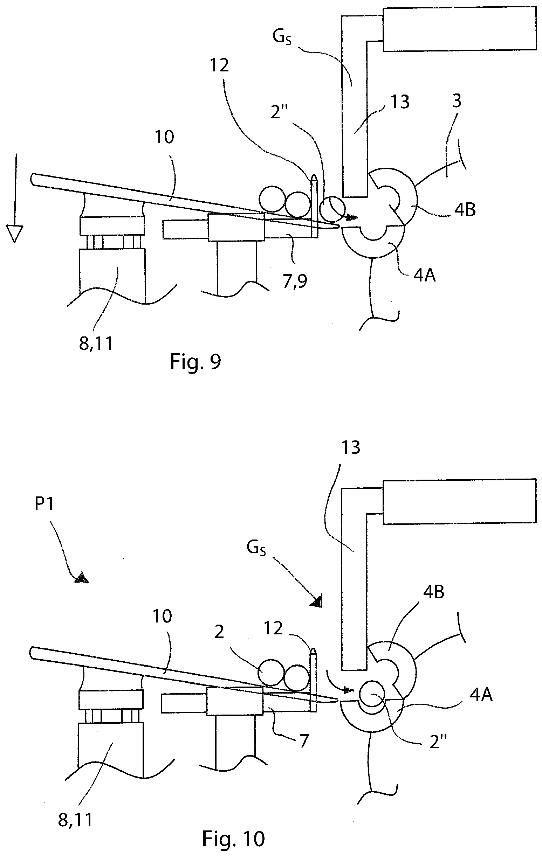

The lifting device 8 is movable from a lower position P1, shown better in Figures 7 and 10, to an upper position P2, shown better in Figure 8.

The lifting device 8 is configured to pick up one or more bars 2 from the support loading unit 7 to lift the bars 2 to the upper position P2 to then deliver a bar 2 to the guide unit 4 that, in an open position, is ready to receive the bar 2.

The lifting device 8 comprises a plurality of lifting bars 10, distributed along the loading zone Z_{L}. It is possible to provide a suitable number and distribution of lifting bars 10, for example, three. Obviously, the lifting bars 10 can be replaced by other equivalent elements of desired shape, such as plates etc.

Each lifting bar 10 extends transversely to the longitudinal axis A_{L} and is tilted downwards, pointing to the drum 3.

The lifting device 8 comprises a plurality of lifting cylinders 11, for example hydraulic or pneumatic lifting cylinders 11, each configured to support and move vertically a respective lifting bar 10.

The lifting cylinders 11 are mutually synchronized.

The loading unit G_{L} further comprises a selector unit G_{S} that is suitable for cooperating with the aforesaid lifting device 8.

In particular, the loading unit-selector G_{S} is configured to select only one bar 2 at a time when the lifting device 8 is in the upper position P2 so as to achieve the transfer of the bar 2 to the respective guide unit 4 placed near the support loading unit 7.

The selector unit G_{S} comprises resting plates 12 that project vertically upwards and are connected to the ends of the aforesaid support bars 9, namely to the ends nearest the drum 3. The resting plates 12 are shaped to separate a bar 2 nearer the drum 3 than the remaining bars 2 that rest on the lifting device 8.

The selector unit G_{S} further comprises abutting elements 13, cooperating with the resting plates 12 and suitable for receiving in an abutting manner and guiding the bar 2 - placed nearer the drum 3 - towards the underlying guide unit 4 ready for receipt.

Precisely, the abutting elements 13 comprise tubular elements that project downwards in a substantially vertical manner. The position of the abutting elements 13 is adjustable both horizontally and vertically.

The position of the abutting elements 13 is adjustable manually or automatically by a respective drive unit.

For example, three abutting elements 13 can be provided that are distributed along the drum 3, or another desired number and distribution of abutting elements 13.

The abutting elements 13 and the resting plates 12 are positioned reciprocally so as to make possible the selection for the bar 2 that has to be conveyed to the respective guide unit 4.

During the transfer of the bar 2, the bar 2 follows a downward path owing to the lowering movement of the lifting device 8.

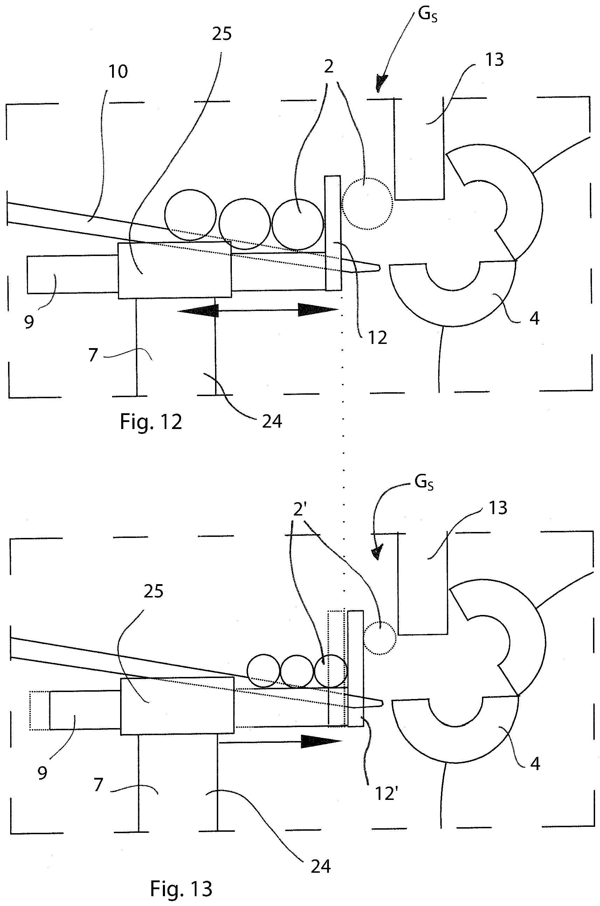

The position of the support bars 9 is adjustable horizontally (as shown in Figures 12 and 13) for approaching/removing the resting plates 12 towards/away from the abutting elements 13 to adapt to the specific diameter of the bar 2 to be loaded. Thus each support bar 9 is fitted to the respective upright 24 by an interposed connecting element 25 that is releasable to adjust the horizontal position of the support bar 9.

Figures 12 and 13 show two possible operating configurations corresponding to two different diameters of a bar 2 (greater diameter) and a bar 2' (lesser diameter) respectively. As clearly shown, the reciprocal position between abutting elements 13 and resting plates 12 and drum 3 is adjustable to adapt to various diameters of the bar 2 to be loaded.

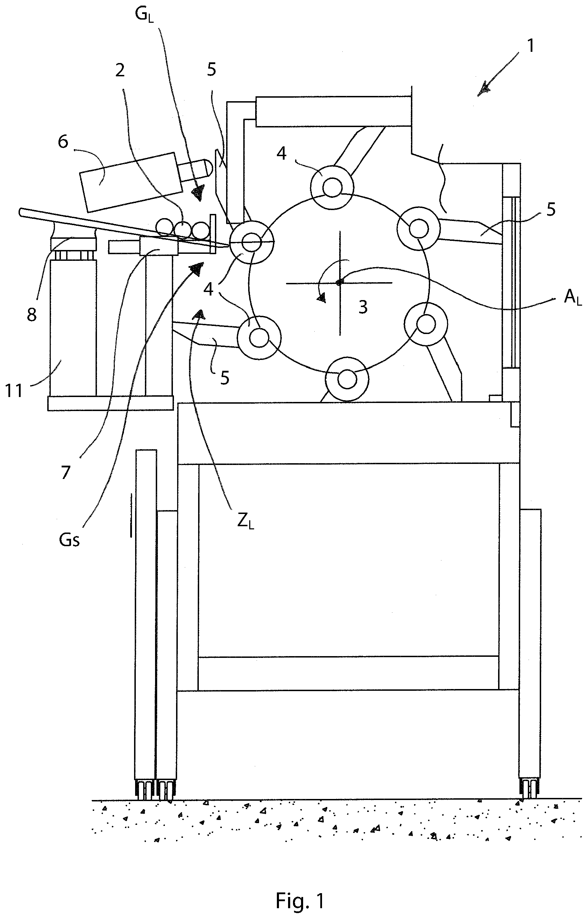

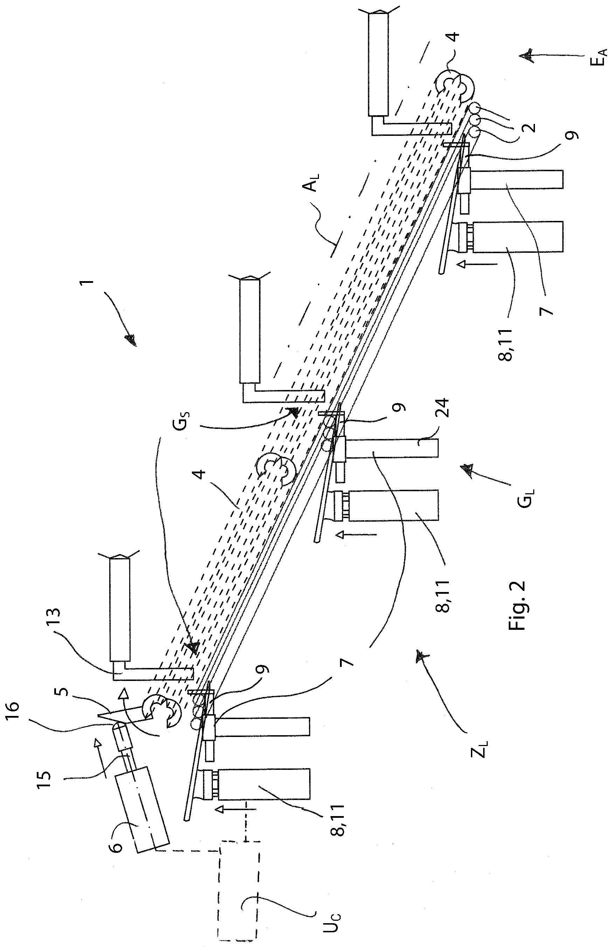

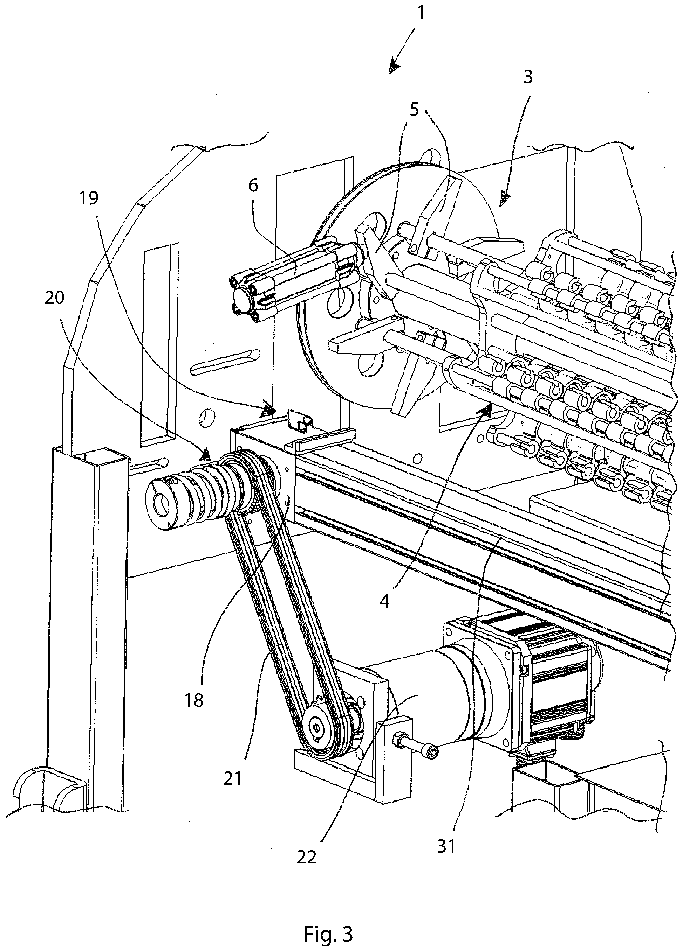

In the embodiment of apparatus 1 shown in Figures 1 to 14, the support bars 9, the abutting elements 13, and the actuator element 6, are so positioned as to enable a bar 2 to be loaded in the guide unit 4 that is, angularly, in the feeding position W1 to the lathe.

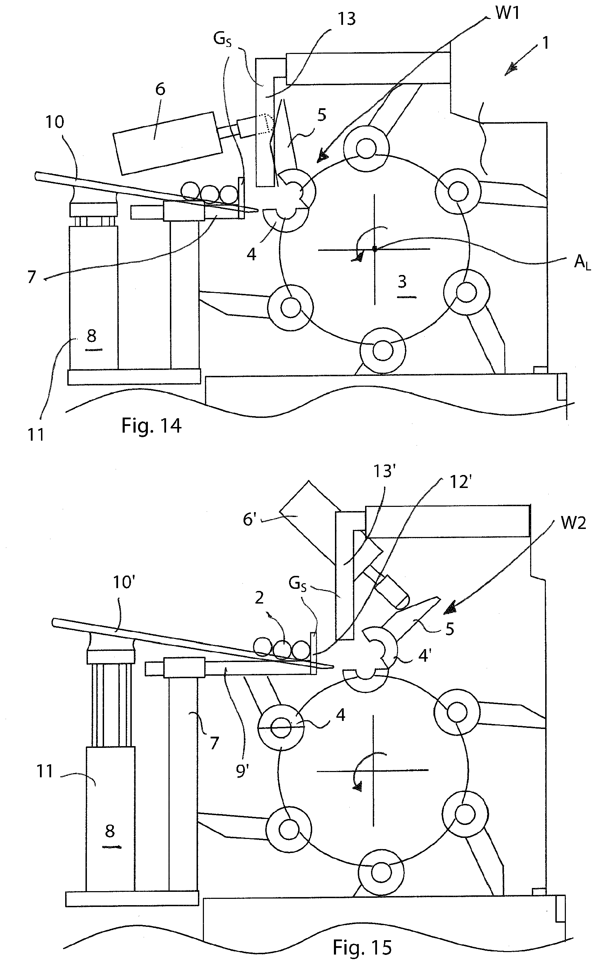

According to a version of the apparatus 1, shown in Figure 15, the actuator element 6', the support bars 9', with the respective resting plates 12' and the abutting elements 13' are positioned to enable a bar 2' to be loaded in the guide units 4' that is in the pre-loading position W2 for the bar, which precedes the feeding position W1.

Owing to this last possible configuration, the feeding apparatus 1enables the loading and feeding operations to be speeded up further; in fact, in order to load a new bar 2 it is not necessary to wait for feeding to the lathe of the current bar 2 being machined to be completed so that the corresponding guide unit 4 located in the feeding position W1 is released. Differently, whilst the current bar 2 being machined 2 is fed to the lathe, it is possible to immediately proceed with loading of a new bar 2 on the adjacent guide units 4 loaded in the pre-loading position W2. At the end of machining of the current bar, it is sufficient to rotate the drum 3 by an angular step to take the subsequent guide unit 4 - which has already been loaded in anticipation- from the pre-loading position W2 to the feeding position W1, reducing loading time by several seconds.

The actuator element 6 is fixed to a portion of the frame near the end of the drum 3 in in which the levers 5 are present.

The fixing position of the actuator element 6 or 6' is selected according whether the actuator element 6 or 6' has to open the guide unit 4 in the feeding position W1, or in the pre-loading position W2 placed higher up, considering the rotation direction of the drum 3 shown in Figures 1, 14 and 14.

The apparatus is provided with a control and synchronization unit UC configured to drive synchronously the actuator element 6 (or 6') and the loading unit G_{L}.

In the apparatus 1, a bar-advancing-device 18 is provided, without a lubrication circuit, and comprising a pusher 19 movable horizontally along rail 31.

The pusher 19 is driven - through a chain or a belt - by a friction wheel 20 that is in turn rotated, by a flexible transmission element 21, by a motor 22 of brushless type with which an encoder is coupled for the precise control of the position of said pusher 19.

Owing to this configuration, with a brushless motor 22 and position encoder incorporated therein, the advancing system of the pusher 19 is precise, free of drawbacks such as seizure phenomena and is very simplified and easier to manage than the traditional screw-nut advancing systems.

The device 18, owing to the particular drive mechanism with a brushless motor does not require lubrication and is significantly simplified both structurally and functionally compared with the traditional and more complex systems of screw-nut type that of necessity require a constant lubrication action, and are expensive and demanding from the operational point of view and from the maintenance point of view.

In order to ensure a correct action of guiding and feeding the bars, particularly bars of reduced diameter, and in order to prevent any risk of jamming at the end portion of the guide units 4 and of the end E_{A} near the lathe, the feeding apparatus 1, in an embodiment, is provided with sleeves 23, 23' or reduction bushings.

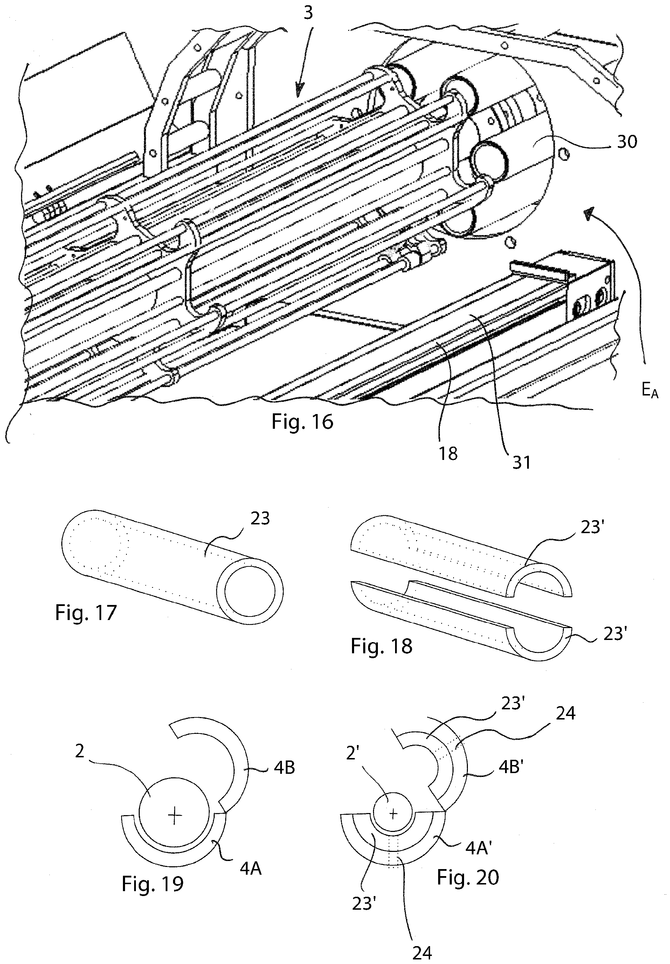

Reduction sleeves 23 of a first type are provided, made as a single piece of tubular shape (as shown in Figure 17), shaped for being fixed to respective tubular cylinders 30 that extend in the front part of the apparatus 1 at the interface with the machine tool.

Reduction sleeves 23' of a second type are provided, each consisting of a pair of fixed semi-tubular cylinders that, by screws 24, are each coupled with one of the two parts 4A', 4B' that make up the guide unit.

Figure 19 shows a guide unit devoid of a reduction sleeve 23', and housing a bar having a determined diameter. Figure 20 shows the guide unit provided with the reduction sleeve 23 that optimizes the containing and guiding action for a bar 2' of lesser diameter than the case of Figure 19.

The reduction sleeves 23, 23' described above are made of a material having a low friction coefficient and high resistance to high temperatures, such as a material based on polytetrafluoroethylene reinforced with additives such as fibreglass and/or graphite and/or bronze (to give high mechanical resistance).

Polytetrafluoroethylene (PTFE) is a semi-crystalline fluoropolymer, provided with excellent heat stability, chemical resistance and a high melting point that enables functioning from -200 to +260°C.

Amongst other features, polytetrafluoroethylene has excellent sliding and non-stick properties, thus improving the operation of the guide units 4.

The feeding apparatus 1-bars, in an embodiment, further comprises a passive lubri-eating-refrigerating circuit that exploits the active lubricating-refrigerating circuit with which the lathe or other machine tool is normally already equipped.

The passive lubricating refrigerating circuit included in the apparatus 1 according to the invention, comprises one or more ducts that are suitable for pouring a lubricating and refrigerating fluid onto the guide unit 4.

The passive lubricating refrigerating circuit is configured to be connected, by a Tee-type connection, to the delivery branch of the active circuit for pumping lubricant with which the lathe is provided.

The passive lubricating refrigerating circuit comprises a collector for collecting lubricant coming from the guide units 4 and a returning duct to return the lubricant to a collection and filtering tank of said machine tool.

Owing to this feature, correct operation of the drum 3 and of the guide units 4 is ensured by a simple, cheap and effective solution, without necessarily having to resort to complex, costly and redundant dedicated lubricating and refrigerating systems.

With reference to Figures 8 to 10, the operation of the apparatus 1 according to the invention is now disclosed briefly.

In the rest position, corresponding to the lower position P1, the bars 2 lie on the support loading unit 7, and the support plates 12 prevent them from falling (Figure 7).

When loading of a bar 2 on the drum 3 is required, the control and synchronization unit UC drives the actuator element 6 that opens the guide unit 4 present in the loading position.

The control and synchronization unit UC further drives the loading unit G_{L}, in particular the lifting device 8. More precisely, the various lifting cylinders 11 are driven to move from the lower position P1 to the upper position P2 by then raising the bars 2 (Figure 8).

In the upper position P2, the bars 2 are thus raised above the support loading unit and are at a greater height with respect to the support plates 12.

Upon reaching the upper position P2, the bars 2 roll along the tilted lifting bars 10 and the bar 2", which is nearer to the drum 3, comes to rest directly on the abutting elements 13, as shown in Figure 8.

All the bars then rest side by side in contact with one another. Only the bar 2" placed nearer to the drum 3 rests directly on the abutting elements 13. This bar 2" is thus positioned beyond the resting plate 12. Basically, the distance between the resting plate 12 and the respective abutting element 13 is substantially equal to the diameter of the bar 2" to be loaded. The latter is positioned in the volume placed the resting plates 12 and the abutting elements 13.

At this point, the lifting bars 10 are again lowered by taking the bars 2 to the lower position P1. In the lowering movement, the bar 2" that is in the zone placed between the resting plate 12 and the abutting element 13 is induced to follow a path that leads inside the corresponding guide units 4.

During the lowering movement, the resting plate 12 is inserted between the bar 2" to be loaded and the adjacent more external bar 2 that is still intended to be returned to the support loading unit. In this manner, the resting plate 12 acts, on the one hand, as a guide for the bar 2" and on the other hand as a barrier for the remaining bars 2.

Once the bar 2" has been introduced into the guide unit 4, the stem 15 of the actuator element 6 retracts to enable the lever 5 to be recalled to the closed position of the guide unit 4.

At this point, the pusher 19 is driven to push the loaded bar to the machine tool so that the bar 2 can be subjected to machining.

From what has been disclosed above, it is clear that the feeding apparatus 1 according to the invention enables all the objects declared above to be achieved. The apparatus 1 is structurally and functionally simplified, has reduced weight and inertia mass and is able to operate more quickly than prior-art apparatuses.

Owing to the general slim and simple configurations, the problems are overcome that are linked to the lubrication and cooling of the various parts without the need to provide complex, costly and redundant lubricating and refrigerating systems.

Advancing of the bars 2 to be processed is optimized and free of vibrations and jamming, dynamic stress and vibrations, and this is particularly appreciable when, in the case of bars with a reduced diameter, the reduction sleeves 23, 23' are resorted to.

The new system for opening the guide units, with the actuator element 6 acting directly on the levers 5, is extremely simplified, effective and reliable.

Owing to the new loading unit G_{L} with the Selector unit G_{S} the operation of loading the bars 2 on the various guide units 4 is significantly simplified.

The general simplified configuration further entails lower manufacturing and maintenance costs than those of prior-art apparatuses.

It is possible to configure and size the apparatus 1 in a desired manner in function of the applications for which the apparatus 1 can be intended, and variations on and/or additions to what has been disclosed and illustrated in the attached figures.

## Claims

1. Apparatus (1) for feeding bars (2) to a machine tool, comprising:
- a rotary drum (3) provided with a plurality of guide units (4) distributed circumferentially and extending parallel to a longitudinal axis (A_{L}) of said drum (3) ,
- each guide unit (4) consisting of two parts (4A, 4B) that are reciprocally movable and openable, by means of a respective lever (5) placed at one end, to receive inside a respective bar (2) to be advanced to said machine tool,
- an actuator element (6) configured to act, each time, directly on a specific lever (5) to open the corresponding guide unit (4),
**characterised by**:
- a support assembly (7) comprising a plurality of support bars (9) suitable for receiving and supporting a plurality of bars (2), to be fed, in a position adjacent to said drum (3),
- a loading unit (G_{L}) comprising a lifting device (8) that is movable from a lower position (P1) to an upper position (P2) and configured to pick up one or more bars (2) from said support assembly (7) and lift up said one or more bars (2) to said upper position (P2), said loading unit (G_{L}) further comprising a selector unit (G_{S}) configured to select a single bar (2) at a time when said lifting device (8) is in said upper position (P2) so as to achieve the transfer of said bar to a respective guide unit (4), wherein
- said selector unit (G_{S}) comprising resting plates (12) that project vertically upwards and are connected to the ends, placed nearer said drum (3), of respective support bars (9) of said support assembly (7), said resting plates (12) being shaped for separating a bar (2) - which is nearer said drum (3) - from the remaining bars (2) that rest on said lifting device (8).

2. Apparatus according to claim 1, wherein said bars (9) of said plurality of support bars (9) are distributed along a loading zone (ZL) that extends longitudinally in a position adjacent to said drum (3), each support bar (9) extending transversely to said longitudinal axis (A_{L}).

3. Apparatus according to claim 2, wherein said lifting device (8) comprises a plurality of lifting bars (10), distributed along said loading zone (Z_{L}), each lifting bar (10) extending transversely to said longitudinal axis (A_{L}) being tilted downwards in the direction of said drum (3).

4. Apparatus according to claim 3, wherein said lifting device (8) comprises a plurality of lifting cylinders (11), that are drivable in a synchronized manner with one another, each suitable for supporting and moving vertically a respective lifting bar (10).

5. Apparatus according to any one of claims 1 to 4, wherein said selector unit (Gs) comprises abutting elements (13) suitable for receiving in an abutting manner and guiding the bar (2) which is nearer said drum (3), said abutting elements (13) and said resting plates (12) being reciprocally positioned so as to select said bar (2) and convey the bar (2) to the respective guide unit (4), said bar (2) being transferred downwards along a path determined by the lowering movement of said lifting device (8).

6. Apparatus according to claim 5, wherein the position of said support bars (9) is adjustable horizontally, manually or automatically, by a drive member, to move said resting plates (12) closer to, or away from said abutting elements (13) to adapt to the specific diameter of the bar (2) to be loaded.

7. Apparatus according to claim 5 or 6, wherein the position of said abutting elements (13) is adjustable manually or automatically by a respective drive unit, with respect to said resting plates (12) and to said drum (3) to adapt to the diameter of the bar (2) to be loaded.

8. Apparatus according to any one of claims 5 to 7, wherein said actuator element (6), said support bars (9) and said abutting elements (13) are positioned in such a manner as to enable a bar (2) to be loaded in the guide unit (4) which is in a feeding position (W1) of the machine tool, or said actuator element (6'), said support bars (9'), with the respective resting plates (12') and said abutting elements (13') are positioned to enable a bar (2') to be loaded into the guide units (4') which is in a pre-loading position (W2) for the bar, which precedes said feeding position (W1).

9. Apparatus according to claim 8, wherein said actuator element (6) is fixed to a portion of the frame near the end of the drum (3) in which said levers (5) are present, said actuator element (6) being positioned to open the guide unit (4) that is in said feeding position (W1) of the machine tool or is positioned to open the guide unit (4') that is in said pre-loading position (W2).

10. Apparatus according to any one of the preceding claims, wherein each guide unit (4) is maintained normally closed by a respective torsion spring (14), and wherein said actuator element (6) comprises a pushing stem (15), configured to intercept a contact surface (17) of the respective lever (5) to push the latter so as to open the corresponding guide unit (4), at the outermost end of said pushing stem (15) a spherical element (16) being press-fitted, shaped to adapt to any lying-position of the contact surface (17) of said lever (5).

11. Apparatus according to claim 10, wherein said pushing stem (15) is movable linearly and in which said actuator element (6) is a pneumatic cylinder.

12. Apparatus according to any one of the preceding claims further comprising a control and synchronization unit (U_{C}) configured to drive synchronously said actuator element (6) and said loading unit (G_{L}).

13. Apparatus according to any one of the preceding claims, further comprising a bar-advancing device (18), devoid of a lubrication circuit and comprising a pusher (19) driven - through a chain or belt - by a friction wheel (20) which is rotated, through a flexible transmission element (21), by a brushless motor (22) with which an encoder is coupled to control the position of said pusher (19).

14. Apparatus according to any one of the preceding claims, wherein in each guide unit (4), along a respective final portion that extends to the front end (E_{A}) of the drum (3) intended to interface with the machine tool, and also beyond the guide units (4), sleeves (23, 23') or reduction bushings are provided, suitable for adapting to bars (2') with a reduced diameter, some of said reduction sleeves (23) being made of a single tubular piece and other reduction sleeves (23'), placed in the guide units (4), consisting of pairs of tubular half-cylinders (23') fixed, by screws (24), to one of the two parts (4A', 4B') that are reciprocally movable that make up the guide units, said sleeves (23, 23') or reduction bushings being made of a material having a low friction coefficient and resistance to high temperatures, such as a material based on polytetrafluoroethylene reinforced with additives such as fibreglass and/or graphite and/or bronze.

15. Apparatus according to any one of the preceding claims, further comprising a passive lubricating-refrigerating circuit comprising one or more ducts that are suitable for pouring a lubricating and refrigerating fluid onto said guide unit (4), said passive lubricating-refrigerating circuit being configured to be connected, by a Tee-type connection, to the delivery branch of an active pumping circuit of the lubricant with which said machine tool is provided, said passive lubricating-refrigerating circuit comprising a collector for collecting the lubricant coming from the guide units (4) and a returning duct to return the lubricant to a collection and filtering tank of said machine tool.

## Patentansprüche

1. Einrichtung (1) zum Zuführen von Stangen (2) zu einer Werkzeugmaschine, umfassend:
- eine Drehtrommel (3), die mit einer Vielzahl von Führungseinheiten (4) bereitgestellt ist, die umlaufend um eine Längsachse (A_{L}) der Trommel (3) verteilt sind und sich parallel dazu erstrecken,
- wobei jede Führungseinheit (4) aus zwei Teilen (4A, 4B) besteht, die hin- und herbewegbar und mittels eines jeweiligen Hebels (5), der an einem Ende angeordnet ist, öffenbar sind, um im Inneren eine jeweilige Stange (2) aufzunehmen, die zu der Werkzeugmaschine vorgeschoben werden soll,
- ein Betätigungselement (6), das so konfiguriert ist, dass es jedes Mal direkt auf einen bestimmten Hebel (5) einwirkt, um die entsprechende Führungseinheit (4) zu öffnen,
**gekennzeichnet durch**:
- eine Stützanordnung (7), die eine Vielzahl von Stützstangen (9) umfasst, die zum Aufnehmen und Stützen einer Vielzahl zuzuführender Stangen (2) in einer Position angrenzend an die Trommel (3) geeignet sind,
- eine Ladeeinheit (G_{L}), die eine Hebevorrichtung (8) umfasst, die von einer unteren Position (P1) in eine obere Position (P2) bewegbar ist und so konfiguriert ist, dass sie eine oder mehrere Stangen (2) von der Stützanordnung (7) aufnimmt und die eine oder mehreren Stangen (2) in die obere Position (P2) anhebt, wobei die Ladeeinheit (G_{L}) weiter eine Auswahleinheit (G_{S}) umfasst, die zum Auswählen einer einzelnen Stange (2) zu einem Zeitpunkt, wenn sich die Hebevorrichtung (8) in der oberen Position (P2) befindet, konfiguriert ist, um die Übergabe der Stange an eine jeweilige Führungseinheit (4) zu erreichen, wobei
- die Auswahleinheit (G_{S}) Auflageplatten (12) umfasst, die vertikal nach oben ragen und mit den näher an der Trommel (3) angeordneten Enden der jeweiligen Stützstangen (9) der Stützanordnung (7) verbunden sind, wobei die Auflageplatten (12) so geformt sind, dass sie eine Stange (2) - die sich näher an der Trommel (3) befindet - von den übrigen Stangen (2) trennen, die auf der Hebevorrichtung (8) liegen.

2. Einrichtung nach Anspruch 1, wobei die Stangen (9) der Vielzahl von Stützstangen (9) entlang einer Ladezone (ZL) verteilt sind, die sich in Längsrichtung in einer Position angrenzend an die Trommel (3) erstreckt, wobei sich jede Stützstange (9) quer zur Längsachse (A_{L}) erstreckt.

3. Einrichtung nach Anspruch 2, wobei die Hebevorrichtung (8) eine Vielzahl von Hebestangen (10) umfasst, die entlang der Ladezone (Z_{L}) verteilt sind, wobei jede Hebestange (10), die sich quer zur Längsachse (A_{L}) erstreckt, nach unten in Richtung der Trommel (3) geneigt ist.

4. Einrichtung nach Anspruch 3, wobei die Hebevorrichtung (8) eine Vielzahl von Hebezylindern (11) umfasst, die synchron zueinander antreibbar sind, wobei jeder zum Stützen und vertikalen Bewegen einer jeweiligen Hebestange (10) geeignet ist.

5. Einrichtung nach einem der Ansprüche 1 bis 4, wobei die Auswahleinheit (Gs) Anschlagelemente (13) umfasst, die dazu geeignet sind, die Stange (2), die sich näher an der Trommel (3) befindet, auf anschlagende Weise aufzunehmen und zu führen, wobei die Anschlagelemente (13) und die Auflageplatten (12) wechselseitig positioniert sind, um die Stange (2) auszuwählen und die Stange (2) zur jeweiligen Führungseinheit (4) zu befördern, wobei die Stange (2) entlang eines Pfads nach unten transportiert wird, der von der Absenkbewegung der Hebevorrichtung (8) bestimmt wird.

6. Einrichtung nach Anspruch 5, wobei die Position der Stützstangen (9) horizontal manuell oder automatisch durch ein Antriebselement einstellbar ist, um die Auflageplatten (12) näher an die Anschlagelemente (13) heran oder von diesen weg zu bewegen, um sich an den spezifischen Durchmesser der zu ladenden Stange (2) anzupassen.

7. Einrichtung nach Anspruch 5 oder 6, wobei die Position der Anschlagelemente (13) manuell oder automatisch durch eine jeweilige Antriebseinheit in Bezug auf die Auflageplatten (12) und die Trommel (3) einstellbar ist, um sich an den Durchmesser der zu ladenden Stange (2) anzupassen.

8. Einrichtung nach einem der Ansprüche 5 bis 7, wobei das Betätigungselement (6), die Stützstangen (9) und die Anschlagelemente (13) so positioniert sind, dass sie einer Stange (2) ermöglichen, in die Führungseinheit (4) geladen zu werden, die sich in einer Zuführposition (W1) der Werkzeugmaschine befindet, oder das Betätigungselement (6'), die Stützstangen (9'), mit den jeweiligen Auflageplatten (12'), und die Anschlagelemente (13') so positioniert sind, dass sie einer Stange (2') ermöglichen, in die Führungseinheiten (4') geladen zu werden, die sich in einer Vorladeposition (W2) für die Stange befinden, die der Zuführposition (W1) vorausgeht.

9. Einrichtung nach Anspruch 8, wobei das Betätigungselement (6) an einem Abschnitt des Rahmens nahe dem Ende der Trommel (3), in dem sich die Hebel (5) befinden, befestigt ist, wobei das Betätigungselement (6) positioniert ist, die Führungseinheit (4) zu öffnen, die sich in der Zuführposition (W1) der Werkzeugmaschine befindet, oder positioniert ist, die Führungseinheit (4') zu öffnen, die sich in der Vorladeposition (W2) befindet.

10. Einrichtung nach einem der vorstehenden Ansprüche, wobei jede Führungseinheit (4) durch eine jeweilige Torsionsfeder (14) normal geschlossen gehalten wird, und wobei das Betätigungselement (6) einen Schubschaft (15) umfasst, der so konfiguriert ist, dass er eine Kontaktfläche (17) des jeweiligen Hebels (5) abfängt, um diesen zu schieben, um die entsprechende Führungseinheit (4) zu öffnen, wobei am äußersten Ende des Schubschafts (15) ein kugelförmiges Element (16) eingepresst ist, das so geformt ist, dass es sich an jede Liegeposition der Kontaktfläche (17) des Hebels (5) anpasst.

11. Einrichtung nach Anspruch 10, wobei der Schubschaft (15) linear bewegbar ist, und wobei das Betätigungselement (6) ein Pneumatikzylinder ist.

12. Einrichtung nach einem der vorstehenden Ansprüche, die weiter eine Steuer- und Synchronisierungseinheit (U_{C}) umfasst, die so konfiguriert ist, dass sie das Betätigungselement (6) und die Ladeeinheit (G_{L}) synchron antreibt.

13. Einrichtung nach einem der vorstehenden Ansprüche, die weiter eine Stangenvorschubvorrichtung (18) ohne einen Schmierkreislauf umfasst und einen Schieber (19) umfasst, der - über eine Kette oder einen Riemen - von einem Reibrad (20) angetrieben wird, das über ein flexibles Getriebeelement (21) von einem bürstenlosen Motor (22) gedreht wird, mit dem ein Encoder gekoppelt ist, um die Position des Schiebers (19) zu steuern.

14. Einrichtung nach einem der vorstehenden Ansprüche, wobei in jeder Führungseinheit (4), entlang eines jeweiligen Endabschnitts, der sich zum vorderen Ende (E_{A}) der Trommel (3), das sich mit der Werkzeugmaschine koppeln soll, und auch über die Führungseinheiten (4) hinaus erstreckt, Muffen (23, 23') oder Reduzierhülsen bereitgestellt sind, die dazu geeignet sind, sich an Stangen (2') mit reduziertem Durchmesser anzupassen, wobei einige der Reduziermuffen (23) aus einem einzigen Rohrstück bestehen und andere Reduziermuffen (23'), die in den Führungseinheiten (4) angeordnet sind, aus Paaren rohrförmiger Halbzylinder (23') bestehen, die mit Schrauben (24) an einem der zwei Teile (4A', 4B') befestigt sind, die hin- und herbewegbar sind und die Führungseinheiten bilden, wobei die Muffen (23, 23') oder Reduzierhülsen aus einem Material hergestellt sind, das einen niedrigen Reibungskoeffizienten und hohe Temperaturbeständigkeit aufweist, wie einem Material auf der Basis von Polytetrafluorethylen, verstärkt mit Zusatzstoffen wie Glasfaser und/oder Graphit und/oder Bronze.

15. Einrichtung nach einem der vorstehenden Ansprüche, die weiter einen passiven Schmier- und Kühlkreislauf umfasst, der einen oder mehrere Kanäle umfasst, die zum Gießen eines Schmier- und Kühlfluids auf die Führungseinheit (4) geeignet sind, wobei der passive Schmier- und Kühlkreislauf konfiguriert ist, über eine T-Verbindung mit dem Abgabezweig eines aktiven Pumpkreislaufs des Schmiermittels verbunden zu werden, mit dem die Werkzeugmaschine bereitgestellt ist, wobei der passive Schmier- und Kühlkreislauf einen Sammler zum Sammeln des Schmiermittels, das von den Führungseinheiten (4) kommt, und einen Rückführkanal, um das Schmiermittel zu einem Sammel- und Filtertank der Werkzeugmaschine zurückzuführen, umfasst.

## Revendications

1. Appareil (1) pour alimenter en barres (2) une machine-outil, comprenant :
- un tambour rotatif (3) pourvu d'une pluralité d'unités de guidage (4) réparties circonférentiellement et s'étendant parallèlement à un axe longitudinal (AL) dudit tambour (3),
- chaque unité de guidage (4) se composant de deux parties (4A, 4B) qui peuvent se déplacer en va-et-vient et s'ouvrir, au moyen d'un levier respectif (5) placé à une extrémité, pour recevoir à l'intérieur une barre respective (2) à faire avancer vers ladite machine-outil,
- un élément d'actionnement (6) configuré pour agir, à chaque fois, directement sur un levier spécifique (5) pour ouvrir l'unité de guidage (4) correspondante,
**caractérisé par** :
- un ensemble de support (7) comprenant une pluralité de barres de support (9) appropriées pour recevoir et supporter une pluralité de barres (2), à alimenter, dans une position adjacente au dit tambour (3),
- une unité de chargement (G_{L}) comprenant un dispositif de levage (8) qui peut se déplacer d'une position inférieure (P1) à une position supérieure (P2) et configuré pour saisir une ou plusieurs barres (2) dudit ensemble de support (7) et lever lesdites une ou plusieurs barres (2) jusqu'à ladite position supérieure (P2), ladite unité de chargement (G _{L}) comprenant en outre une unité de sélection (G_{S}) configurée pour sélectionner une seule barre (2) à un moment où ledit dispositif de levage (8) est dans ladite position supérieure (P2) de manière à réaliser le transfert de ladite barre vers une unité de guidage respective (4), dans lequel
- ladite unité de sélection (G_{S}) comprenant des plaques d'appui (12) qui font saillie verticalement vers le haut et sont reliées aux extrémités, placées plus près dudit tambour (3), de barres de support respectives (9) dudit ensemble de support (7), lesdites plaques d'appui (12) étant formées pour séparer une barre (2) - qui est plus proche dudit tambour (3) - des barres restantes (2) qui reposent sur ledit dispositif de levage (8).

2. Appareil selon la revendication 1, dans lequel lesdites barres (9) de ladite pluralité de barres de support (9) sont réparties le long d'une zone de chargement (ZL) qui s'étend longitudinalement dans une position adjacente au dit tambour (3), chaque barre de support (9) s'étendant transversalement au dit axe longitudinal (A_{L}).

3. Appareil selon la revendication 2, dans lequel ledit dispositif de levage (8) comprend une pluralité de barres de levage (10), réparties le long de ladite zone de chargement (Z_{L}), chaque barre de levage (10) s'étendant transversalement au dit axe longitudinal (AL) étant inclinée vers le bas dans la direction dudit tambour (3).

4. Appareil selon la revendication 3, dans lequel ledit dispositif de levage (8) comprend une pluralité de vérins de levage (11), qui peuvent être entraînés de manière synchronisée les uns avec les autres, chacun étant approprié pour supporter et déplacer verticalement une barre de levage respective (10).

5. Appareil selon l'une quelconque des revendications 1 à 4, dans lequel ladite unité de sélection (G_{S}) comprend des éléments de butée (13) appropriés pour recevoir en butée et guider la barre (2) qui est plus proche dudit tambour (3), lesdits éléments de butée (13) et lesdites plaques d'appui (12) étant positionnées en va-et-vient de sorte à sélectionner ladite barre (2) et à transporter la barre (2) vers l'unité de guidage respective (4), ladite barre (2) étant transférée vers le bas le long d'un trajet déterminé par le mouvement d'abaissement dudit dispositif de levage (8).

6. Appareil selon la revendication 5, dans lequel la position desdites barres de support (9) est réglable horizontalement, manuellement ou automatiquement, au moyen d'un élément d'entraînement, pour rapprocher ou éloigner lesdites plaques d'appui (12) desdits éléments de butée (13) pour s'adapter au diamètre spécifique de la barre (2) à charger.

7. Appareil selon la revendication 5 ou 6, dans lequel la position desdits éléments de butée (13) est réglable manuellement ou automatiquement au moyen d'une unité d'entraînement respective, par rapport auxdites plaques d'appui (12) et au dit tambour (3) pour s'adapter au diamètre de la barre (2) à charger.

8. Appareil selon l'une quelconque des revendications 5 à 7, dans lequel ledit élément d'actionnement (6), lesdites barres de support (9) et lesdits éléments de butée (13) sont positionnés de telle manière à permettre à une barre (2) d'être chargée dans l'unité de guidage (4) qui est dans une position d'alimentation (W1) de la machine-outil, ou ledit élément d'actionnement (6'), lesdites barres de support (9'), avec les plaques d'appui respectives (12') et lesdits éléments de butée (13') sont positionnés pour permettre à une barre (2') d'être chargée dans les unités de guidage (4') qui est dans une position de préchargement (W2) pour la barre, qui précède ladite position d'alimentation (W1).

9. Appareil selon la revendication 8, dans lequel ledit élément d'actionnement (6) est fixé à une partie du cadre près de l'extrémité du tambour (3), dans lequel lesdits leviers (5) sont présents, ledit élément d'actionnement (6) étant positionné pour ouvrir l'unité de guidage (4) qui est dans ladite position d'alimentation (W1) de la machine-outil ou est positionnée pour ouvrir l'unité de guidage (4') qui est dans ladite position de préchargement (W2).

10. Appareil selon l'une quelconque des revendications précédentes, dans lequel chaque unité de guidage (4) est maintenue normalement fermée par un ressort de torsion respectif (14) et dans lequel ledit élément d'actionnement (6) comprend une tige de poussée (15), configurée pour intercepter une surface de contact (17) du levier respectif (5) pour pousser ce dernier de sorte à ouvrir l'unité de guidage correspondante (4), à l'extrémité la plus à l'extérieur de ladite tige de poussée (15) un élément sphérique (16) étant emmanché à force, formé pour s'adapter à n'importe quelle position allongée de la surface de contact (17) dudit levier (5).

11. Appareil selon la revendication 10, dans lequel ladite tige de poussée (15) peut se déplacer linéairement et dans lequel ledit élément d'actionnement (6) est un vérin pneumatique.

12. Appareil selon l'une quelconque des revendications précédentes, comprenant en outre une unité de commande et de synchronisation (U_{C}) configurée pour entraîner de manière synchrone ledit élément d'actionnement (6) et ladite unité de chargement (G _{L}).

13. Appareil selon l'une quelconque des revendications précédentes, comprenant en outre un dispositif d'avance de barre (18), dépourvu d'un circuit de lubrification et comprenant un poussoir (19) entraîné - au moyen d'une chaîne ou d'une courroie - par une roue à friction (20) qui est entraînée en rotation, par un élément de transmission flexible (21), par un moteur sans balais (22) auquel un codeur est couplé pour contrôler la position dudit poussoir (19).

14. Appareil selon l'une quelconque des revendications précédentes, dans lequel, dans chaque unité de guidage (4), le long d'une partie finale respective qui s'étend jusqu'à l'extrémité avant (E_{A}) du tambour (3) destinée à avoir une interface avec la machine-outil, et également au-delà des unités de guidage (4), des manchons (23, 23') ou douilles de réduction sont prévues, appropriés pour s'adapter à des barres (2') d'un diamètre réduit, certains desdits manchons de réduction (23) étant réalisés en une seule pièce tubulaire et d'autres manchons de réduction (23'), placés dans les unités de guidage (4), se composant de paires de demi-cylindres tubulaires (23') fixés, par des vis (24), à l'une des deux parties (4A', 4B' ) qui peuvent se déplacer en va-et-vient qui composent les unités de guidage, lesdits manchons (23, 23') ou douilles de réduction étant réalisés en un matériau à faible coefficient de frottement et résistant à des températures élevées, tel qu'un matériau à base de polytétrafluoréthylène renforcé d'additifs tels que la fibre de verre et/ou le graphite et/ou le bronze.

15. Appareil selon l'une quelconque des revendications précédentes, comprenant en outre un circuit de lubrification-réfrigération passif comprenant un ou plusieurs conduits qui sont appropriés pour déverser un fluide de lubrification et de réfrigération sur ladite unité de guidage (4), ledit circuit de lubrification-réfrigération passif étant configuré pour être relié, au moyen d'un raccord en T, à la branche de refoulement d'un circuit de pompage actif du lubrifiant dont est pourvue ladite machine-outil, ledit circuit de lubrification-réfrigération passif comprenant un collecteur pour collecter le lubrifiant provenant des unités de guidage (4) et un conduit de renvoi pour renvoyer le lubrifiant vers un réservoir de collecte et de filtrage de ladite machine-outil.
